(19) Europäisches Patentamt
European Patent Office
Office européen des brevets

(11) **EP 1 609 367 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(51) Int Cl.:
***A22C 13/00*** *(2006.01)*

(21) Anmeldenummer: **05011467.7**

(22) Anmeldetag: **27.05.2005**

(54) **Lebensmittelbeschichtungsmasse enthaltend schutzkolloidstabilisierte Polyacrylatdispersionen, deren Verwendung und damit hergestellte beschichtete Lebensmittel**

Food casings containing polyacrylic dispersions stabilised by protective colloids, use thereof and coated foodstuffs produced therewith

Enveloppes pour produits alimentaires contenant des dispersions polyacryliques stabilisés au moyen de colloides protecteurs, leur application et produits alimentaires enrobés ainsi fabriqués

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.06.2004 DE 102004030358**

(43) Veröffentlichungstag der Anmeldung:
**28.12.2005 Patentblatt 2005/52**

(73) Patentinhaber: **Celanese Emulsions GmbH**
**61476 Kronberg/Ts. (DE)**

(72) Erfinder:
• **Jakob, Martin Dr.**
**65779 Kelkheim (DE)**
• **Harrer, Heinrich, Dr.**
**47803 Krefeld (DE)**
• **Cabrera, Ivan, Dr.**
**63303 Dreieich (DE)**

(74) Vertreter: **Ackermann, Joachim**
**Postfach 11 13 26**
**60048 Frankfurt am Main (DE)**

(56) Entgegenhaltungen:
EP-A- 0 001 545    EP-A- 0 100 056
EP-A- 0 671 420    EP-A- 1 151 671
WO-A-03/101209    DE-A- 3 147 519
DE-A- 3 704 563    DE-B- 1 001 576

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft neue Lebensmittelbeschichtungsmassen auf der Basis von schutzkolloidstabilisierten Polyacrylatdispersionen und deren Verwendung, insbesondere als antimikrobiell ausgerüsteter Hilfsstoff für die Käsereifung.

Der Einsatz von Kunststoffdispersionen mit verschiedenster Polymerbasis zur Beschichtung von Hartkäse ist seit langem bekannt. Durch die Oberflächenbehandlung und dem nachfolgenden Auftrocknen der Dispersion wird ein luftdurchlässiger Wasserdampf-Barrierefilm generiert, der sowohl die Schimmelbildung auf dem Käse, als auch ein zu schnelles Austrocknen der Käselaibe während der Reifung verhindert. Während des Reifeprozesses durchlaufen die Käse eine mehrere Monate dauernde Lagerung in Feuchträumen. Dem unerwünschten Wachstum von Mikroorganismen wird dabei durch eine antimikrobielle Ausrüstung der Dispersionen mit speziellen Bioziden, wie zum Beispiel in EP-A-0 986 965 beschrieben, entgegengewirkt. Im Allgemeinen ist es vorteilhaft, wenn keine komplette Wasserdampf-Versiegelung durch die Beschichtung erfolgt, sondern vielmehr durch kontrollierte Abgabe von Wasser aus dem reifenden Käse eine ausreichende Geschmacks- und Rindenbildung erfolgen kann.

Als Basis für solche Lebensmittelbeschichtungsmassen sind Dispersionen vor allem auf Basis von homo- oder copolymerem Poly(vinylacetat), hier insbesondere auf Basis von Copolymeren mit Alkylmaleinaten/-fumaraten oder Ethen, im Stand der Technik bereits beschrieben worden.

Auch andere Monomere wurden für Lebensmittelüberzugsmassen verwendet. So nennt CH-A-419,816 Vinylchlorid, Vinylpropionat, Vinylidenchlorid, Acrylsäureester, Styrol, Crotonsäure, Acrylonitril, Fumarsäure, Itaconsäure, Vinylbutyrat, Vinylpyrrolidon und Propylen. In den Ausführungsbeispielen werden auch copolymere Emulsionen aus Vinylacetat und Acrylatmonomeren genannt, welche aus überwiegend Vinylacetat aufgebaut sind und daneben bis zu 20 Gewichtsteilen Acrylatmonomere wie 2-Äthylstearylacrylat, Butylacrylat, Polyäthoxyäthylmethacrylat oder Methylmethacrylat in der Polymermasse der Emulsion enthalten. In Ausführungsbeispiel 6 der CH-A-419,816 wird eine 50 %ige Emulsion eines Copolymeren, bestehend aus 720 Teilen Vinylacetat und 180 Teilen Methylmethacrylat, beschrieben, zu der noch jeweils 50 Teile eines Polybutylacrylats sowie ein Fungizid zugesetzt werden.

US-A-2003/0055010 beschreibt eine Methode, eine hohe Polyen-Fungizid-Aktivität in wässriger Lösung einzustellen. Diese Lösungen umfassen ebenfalls Polymerdispersionen für die Lebensmittel- und Käsebeschichtung. Bevorzugte Monomere für diese Dispersionen sind Vinylacetat, Ethylen, Vinylester gesättigter Fettsäuren der Kettenlänge $C_2$-$C_{18}$, Ester der Malein- und Fumarsäure mit einwertigen gesättigten aliphatischen Alkoholen der Kettenlänge $C_4$-$C_8$ sowie Acrylsäureester einwertiger aliphatischer gesättigter Alkohole der Kettenlänge $C_4$-$C_8$ bzw. Mischungen von alpha-Olefinen $C_{14}$-$C_{16}$. Im Beispielteil der Druckschrift wird ®Mowilith LDM 5041 erwähnt, eine 45 %ige copolymere Dispersion von Vinylacetat und Butylacrylat.

Die speziell als Hilfsmittel für die Käsereifung hergestellten Polymerdispersionen müssen auf den komplexen mikrobiellen Ablauf der Käsereifung einerseits, und den damit verbundenen hohen logistischen Aufwand andererseits maßgeschneidert eingestellt werden. Die Anforderungen an die Dispersionen werden gestellt durch die maschinelle Applikation beim Auftrag der Beschichtung, den klimatischen und mikrobiellen Bedingungen während der Feuchtraum-Lagerung und von der mechanischen Belastung sowohl bei der maschinellen Handhabung im Feuchtraum und später der gereiften Käse als Endprodukt beim Transport. Dies geschieht letztlich durch eine geeignete Auswahl von entsprechenden Stabilisierungsmitteln für die Dispersion sowie durch die Auswahl geeigneter Monomersysteme.

In der WO 03/054041 wird eine Lebensmittelbeschichtungsmasse auf Basis eines Copolymeren von Vinylestern und Dialkylestern der Malein- oder Fumarsäure beschrieben, welche sich gegenüber herkömmlichen Produkten durch einen deutlich verbesserten Filmglanz und gleichzeitig eine verbesserte Scherstabilität auszeichnet. Gleichzeitig besitzen die mit dieser Dispersion hergestellten Beschichtungen auch eine niedrige Wasseraufnahme und eine gute Wachshaftung.

Durch den relativ hohen Gehalt an Vinylacetat in den vorgenannten Lösungsansätzen auf Basis copolymerer Poly(vinylacetate) besitzen die Filme trotz bedeutenden Anteilen an relativ unpolaren Comonomeren noch eine hohe Hydrophilie. Ihre Wasseraufnahme liegt im allgemeinen über 15 Gew. %. Tendenziell neigen diese Filme auch zum Reemulgieren, da der Anteil an gepfropftem Schutzkolloid eine vollständige Filmkoaleszenz verhindert.

Es wäre darüber hinaus im Hinblick auf die Lagerung in Reiferäumen mit sehr hoher Luftfeuchtigkeit ein weiterer technischer Vorteil, wenn stärker hydrophobisiertere Filme aus den Dispersionen entstehen, die über eine noch niedrigere Wasseraufnahme und ein vermindertes Reemulgieren die Tendenz der Käselaibe zum Kleben aneinander und am Reiferegal vermindern. Die verminderte Reemulgierung hätte auch den Vorteil, dass Beschädigungen der feuchten Beschichtung beim Wenden der Käse durch maschinelle Vorrichtungen reduziert würden. Konträr dazu soll der hydrophobisierte Film jedoch noch permeabel für Wasserdampf sein, um den mikrobiellen Reifeprozess kontrolliert steuern zu können.

Ansätze, schutzkolloid-stabilisierte Dispersionen mit hydrophoberer Polymerzusammensetzung zu synthetisieren, sind dem Stand der Technik bereits zu entnehmen.

Die EP-A-62,106 beschreibt ein Verfahren zur Herstellung von Copolymeren, unter anderem auf Basis von (Meth-)Acrylat mit erhöhter Wasserfestigkeit durch Emulsionspolymerisation in Gegenwart von Polyvinylalkohol als Schutzkolloid.

Aus der EP-A-538,571 ist die Herstellung von wässrigen und emulgatorfreien Dispersionen bekannt, wobei ausgewählte Monomere in Gegenwart ausgewählter Polyvinylalkohole um Monomerzulaufverfahren umgesetzt werden. Diese Kunststoffdispersionen haben als Basis auch > 50 Massen-% (Meth-)acrylat.

EP-A-671,420 beschreibt eine wässrige Schutzkolloid-stabilisierte Polyacrylatdispersion, erhältlich durch Emulsionspolymerisation olefinisch ungesättigter Monomere in dispergierter Phase unter Verwendung eines öllöslichen, freie Radikale bildenden Initiators und eines wasserlöslichen Reduktionsmittels bei Reaktionstemperaturen zwischen 40 und 90 °C, wobei ein Gemisch von Monomeren bestehend aus 40 bis 99,9 Gew.-% Alkyl(meth-)acrylaten mit 1 bis 18 Kohlenstoffatomen in der Alkylkette und 0,1 bis 60 Gew.-% weiteren Monomeren in Gegenwart eines Gemisches bestehend aus Polyvinylalkohol und Hydroxyethylcellulose und gegebenenfalls eines anionischen und/oder nichtionischen Emulgators, ohne Zusatz wasserlöslicher Regler polymerisiert wird. Die Ausführungsbeispiele 13 und das Vergleichsbeispiel B (Stabilisierung mit Poly(vinylalkohol)) führen zu Filmen, die mit 9 % bzw 8 % eine niedrige Wasseraufnahme besitzen.

In allen Schriften finden sich über die Eignung als Lebensmittel- oder Käsebeschichtungsmittel jedoch keine Angaben.

Der vorliegenden Erfindung lag die Aufgabe zugrunde, ein verbessertes Lebensmittelbeschichtungsmittel, insbesondere ein Beschichtungsmittel bzw. Hilfsmittel für die Hartkäsereifung bereitzustellen, dessen Filme einerseits eine ausreichend hohe Wasserdampftransmissionsrate und andererseits eine niedrigere Wasseraufnahmefähigkeit sowie ein geringes Reemulgiervermögen besitzen.

Eine weitere Aufgabe der vorliegenden Erfindung bestand in der Bereitstellung eines beschichteten Lebensmittels, das einerseits eine Beschichtung mit ausreichend hoher Wasserdampftransmissionsrate aufweist, die andererseits eine gegenüber herkömmlichen Beschichtungsmassen auf Vinylacetatbasis verringerte Oberflächenklebrigkeit besitzt und die darüber hinaus im feuchten Zustand gute mechanische Eigenschaften besitzt, so dass das beschichtete Lebensmittel ohne Gefahr der Beschädigung gehandhabt werden kann.

Diese Aufgaben werden gelöst durch eine Lebensmittelbeschichtungsmasse enthaltend

a) eine Kunststoffdispersion oder ein Gemisch von Kunststoffdispersionen enthaltend mindestens ein homo- oder copolymeres Poly(meth)acrylat mit mindestes 55 Gew. % (Meth)acrylatmonomereinheiten sowie 0,1 bis 30 Gew. % mindestens eines Schutzkolloids, sowie

b) in Lebensmittelbeschichtungsmassen eingesetzte Hilfsmittel und Zusatzstoffe, insbesondere Hilfsmittel und Zusatzstoffe, die in Käsebeschichtungsmassen verwendet werden.

Als Lebensmittel die mit den erfindungsgemäßen Beschichtungsmassen behandelt werden können, eignen sich prinzipiell alle Lebensmittel oder deren Vorstufen, also auch Saatgut. Insbesondere werden Lebensmittel beschichtet, die bei der Lagerung einer Gefahr des Wasserverlustes ausgesetzt sind und die durch eine Verringerung der Geschwindigkeit des Wasserverlustes verlängert haltbar gemacht werden. Eine weitere Gruppe von Lebensmitteln sind Präparationen, die während eines Herstellungs- oder Verarbeitungsprozesses gezielt Wasser verlieren, um dadurch eine bestimmte Konsistenz und/oder einen bestimmten Geschmack zu entwickeln.

Die Erfindung betrifft auch die mit der Lebensmittelbeschichtungsmasse behandelten Lebensmittel.

Beispiele für erfindungsgemäss beschichtete Lebensmittel sind Früchte, vorzugsweise Hartschalenfrüchte, wie Nüsse, insbesondere Citrusfrüchte, Gemüse, insbesondere Stangengemüse, Fleisch- und Wurstwaren, insbesondere Hartwürste, Käse, insbesondere Hartkäse und Saatgut. Darüber hinaus eignen sich die erfindungsgemäß eingesetzten Beschichtungsmittel zur Herstellung von Beschichtungen als Hilfsmittel bei der Herstellung von Lebensmitteln, insbesondere von Käse.

Die aus der erfindungsgemäßen Lebensmittelbeschichtungsmasse hergestellten Filme zeichnen sich durch eine ausreichend hohe Wasserdampftransmissionsrate aus. Typische Wasserdampftransmissionsraten bewegen sich im Bereich von 50 bis 400 g/(m$^2$ * 24h), bevorzugt von 100 und 230 g/(m$^2$ * 24h), ermittelt an Filmen von 300 μ Schichtdicke.

Die aus der erfindungsgemäßen Lebensmittelbeschichtungsmasse hergestellten Filme zeichnen sich außerdem durch eine vergleichsweise geringe Wasseraufnahmefähigkeit aus. Typische Werte bewegen sich im Bereich von 5 bis 50 %, vorzugsweise von 5 bis 20 %, besonders bevorzugt von 5-15 %, bezogen auf die Trockenmasse des Films.

Die erfindungsgemäß verwendeten homo-oder copolymeren PolyacrylatDispersionen sind erhältlich durch Emulsionspolymerisation von Alkylestern der Acrylsäure bzw. Methacrylsäure in Gegenwart mindestens eines Schutzkolloids.

Geeignete Monomere sind die (Meth-)acrylsäurealkylester mit 1 bis 18 Kohlenstoffatomen in der Alkylkette. Bei den Acrylaten handelt es sich typischerweise um Ester der Acrylsäure mit Alkoholen wie insbesondere Methanol, Ethanol, n-Butanol, iso-Butanol oder 2-Ethyl-hexanol.

3

Bevorzugte Monomere dieses Typs sind Acrylsäuremethyl-, -ethyl-, -n-butyl-, -isobutyl und -2-ethylhexylester.

Bei den Methacrylaten handelt es sich typischerweise um Ester der Methacryl-säure mit Alkoholen wie insbesondere Methanol, Ethanol, n-Butanol, iso-Butanol oder 2-Ethyl-hexanol.

Bevorzugte Monomere dieses Typs sind Methacrylsäuremethyl-, -ethyl-, -n-butyl-, -isobutyl und -2-ethylhexylester.

Bevorzugt sind die linearen und verzweigten Alkylester der (Meth-)Acrylsäure mit 1 bis 8 Kohlenstoffatomen in der Alkylkette. Diese Alkyl-(meth-)acrylate werden in einem Gehalt von 55 bis 100 Gew.-% bezogen auf die Gesamtmenge der Monomeren eingesetzt.

Zur Polymerisation wird bevorzugt ein hartes und ein weiches Monomer bzw. ein Gemisch mehrerer weicher sowie ein Gemisch mehrerer harter Monomere eingesetzt.

Die Bezeichnung 'hart" und 'weich' bezieht sich auf die Lage der Glasübergangstemperatur des aus dem jeweiligen Monomer hergestellten Homopolymers relativ zur Raumtemperatur (25 °C). So bilden weiche Monomere Polymere mit einer Glasübergangstemperatur unterhalb Raumtemperatur, harte Monomere solche mit einer Glasübergangstemperatur oberhalb Raumtemperatur. Durch das Mischungsverhältnis von harten und weichen Monomeren kann die Glasübergangstemperatur des Mischpolymerisats unterhalb der Umgebungstemperatur eingestellt werden. Es werden bevorzugt solche Mischungsverhältnisse von harten und weichen Monomeren angestrebt, bei den die Polymerisate bei Raumtemperatur konsolidierte Film ohne Zusatz externer Weichmacher bilden. Insbesondere sollte die minimale Filmbildungstemperatur unter 20 °C betragen.

Beispiele für harte Monomere sind Methylmethacrylat, Ethylmethacrylat, sec.-Butylmethacrylat und tert.-Butylacrylat. Beispiele für weiche Monomere sind Ethylacrylat, n-Butylacrylat und 2-Ethylhexylacrylat.

Eine erfindungsgemäß eingesetzte copolymere Poly(acrylat)dispersion kann bis zu 45 Gew.-% aus anderen Monomereinheiten als (Meth)acrylaten aufgebaut sein.

Diese Monomere können beispielsweise Vinylester von aliphatischen, gesättigten Carbonsäuren, vorzugsweise Fettsäuren mit einer Kettenlänge von $C_1$-$C_{18}$ sein Beispiele sind Vinylformiat, Vinylacetat, Vinylpropionat, Vinylbutyrat, Vinylisobutyrat, Vinylpivalat, Vinyl-2-ethyl-hexanoat, Vinylester von $\alpha$-verzweigten Carbonsäuren mit 9 bis 11 Kohlenstoffatomen im Säurerest (®Versaticsäuren), die Vinylester der Laurin-, Palmitin-, Myristin- und Stearinsäure.

Eine weitere Gruppe bilden Maleinsäure- und Fumarsäureester von einwertigen aliphatischen Alkoholen der Kettenlänge $C_1$-$C_{18}$. Es handelt es sich um solche von gesättigten Alkoholen der Kettenlänge $C_1$-$C_{18}$ oder um solche mit einwertigen aliphatischen ungesättigten Alkoholen der Kettenlänge $C_3$-$C_{18}$, vorzugsweise jedoch um solche mit gesättigten Alkoholen der Kettenlänge $C_4$-$C_8$, insbesondere Dibutylmaleinat oder Di-2-ethylhexylmaleinat und/oder -fumarat, weiterhin um die Ester aliphatischer Carbonsäuren der Kettenlänge $C_3$-$C_{12}$ mit ungesättigten Alkoholen der Kettenlänge $C_3$-$C_{18}$, oder um Ester von ungesättigten aliphatischen Dicarbonsäuren mit Polyethylenglykolen und/oder Polypropylenglykolen.

Die Verwendung von Dibutylmaleinat und/oder -fumarat als ein solches Comonomere ist besonders bevorzugt.

Eine weitere Gruppe umfasst Vinylchlorid, Vinylidenchlorid, Acrylnitril und Methacrylnitril, Ethylen, Butadien, Isopren, Isobutylen, Propylen, $C_{14}$-$C_{16}$ alpha-Olefine, 2-Chlor-butadien, 2,3-Dichlorbutadien, Tetrafluorethylen, Styrol, Vinylether von einwertigen aliphatischen gesättigten Alkoholen der Kettenlänge $C_1$-$C_{18}$, Acrylsäure, Methacrylsäure, Crotonsäure, Maleinsäure, Fumarsäure, Itaconsäure, Vinylsulfonsäure, Styrolsulfonsäure, Halbester der Malein- bzw. Fumarsäure und der Itaconsäure mit einwertigen aliphatischen gesättigten Alkoholen der Kettenlänge $C_1$-$C_{18}$ sowie deren Alkali- und Ammoniumsalze, Vinylpyrrolidon, Amide der Acryl- und Methacrylsäure und N-Methylolamide der Acryl- und Methacrylsäure sowie deren Ether, N-Vinyl-N-methylacetamid, Acrylsäureester des Diethylaminoethanols und/oder Methacrylsäureester des Dimethylaminoethanols, Acrylsäure- und Methacrylsäureester von zweiwertigen aliphatischen Alkoholen der Kettenlänge $C_2$-$C_{18}$, Divinyl- und Diallylester von gesättigten und ungesättigten aliphatischen Dicarbonsäuren der Kettenlänge $C_3$-$C_{18}$, Vinyl- und Allylester der Acrylsäure und Crotonsäure, Triallylcyanurat und Natrium-2-sulfoethylmethacrylat.

Bevorzugt aus dieser Gruppe sind geringe Mengen, beispielsweise von bis zu 5 Gew. %, bezogen auf die Gesamtmonomermenge, von ethylenisch ungesättigten ionischen Comonomeren, beispielsweise von $\alpha,\beta$-monoethylenisch ungesättigten Mono- und Dicarbonsäuren, wie z.B. von Acrylsäure, Methacrylsäure, Maleinsäure und Itaconsäure und deren wasserlöslichen Salzen. Durch diese Verbindungen kann die kolloidale Stabilität der Dispersion weiter verbessert werden.

Die erfindungsgemäß eingesetzte Dispersion wird durch mindestens ein Schutzkolloid stabilisiert. Es handelt sich bei dieser Verbindung vorzugsweise um Poly(vinylalkohol) vom Hydrolysegrad von 70 bis 100 Mol-% und Viskositäten der 4 gew. %-igen wässrigen Lösungen bei 20°C von 2 bis 70 mPa·s.

Vorzugsweise besitzt der verwendete Poly(vinylalkohol) einen Hydrolysegrad von 85 bis 94 Mol %, es können aber auch Gemische verschiedener Hydrolysegrade im Bereich von 70 bis 100 Mol-%, vorzugsweise von 85 bis 100 Mol-%, wie in WO 03/054041 beschrieben, eingesetzt werden. Die Gesamtmenge beträgt 0,1 bis 30 Gew. %, vorzugsweise 0,1 bis 20 Gew. % , insbesondere 1-15 Gew. % bezogen auf die Masse der eingesetzten Monomere.

Als weitere Schutzkolloide zur Herstellung der Dispersion eignen sich Methylcellulosen, Hydroxyethyl- und Propylcellulosen sowie Natriumcarboxymethylcellulose. In diese Verbindungsgruppe fallen auch Gelatine, Kasein, Stärke, Gummi arabicum, Polyvinylpyrrolidon, Hydroxyethylstärke, Natriumalginat, sowie Homo- oder Copolymerisate aus den zur Herstellung des Copolymerisats verwendeten Polymeren, bzw. ihrer wasserlöslichen Salze, beispielsweise Polyacrylsäure und Polymethacrylsäure. Diese Verbindungen können ebenso wie auch der verwendete Polyvinylalkohol vor, während oder nach der Polymerisation zugegeben werden. Als vorteilhaft hat sich erwiesen, dass ein Teil des Schutzkolloids in der wässrigen Vorlage verwendet wird und ein Teil beispielsweise in Form einer Emulsion zusammen mit den verwendeten Monomeren oder Teilen davon zudosiert wird. Die Schutzkolloide können auch als Verdickungsmittel verwendet werden und nach der Beendigung der Polymerisation zur Einstellung einer geeigneten Applikationsviskosität zugesetzt werden.

Prinzipiell könne auch weitere Stabilisierungsmittel, beispielsweise Emulgatoren mitverwendet werden.

Als Emulgatoren eignen sich Natrium-, Kalium- und Ammoniumsalze von gradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs- bzw. Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoniumchlorid, Acyl-, Alkyl-, Oleyl- und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium- und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol.

Insbesondere eignen sich anionische und/oder nichtionische Emulgatoren. Diese Verbindungen werden von 0,0 bis 5,0 Gew.-%, bezogen auf die Menge der Gesamtmonomeren, verwendet,

Der Feststoffgehalt der erfindungsgemäß eingesetzten Dispersion beträgt 20 bis 65 Gew.-%, vorzugsweise 30 bis 60 Gew. %, und besonders bevorzugt 40 bis 55 Gew. %.

Die Herstellung der erfindungsgemäß zu verwendenden Dispersionen erfolgt vorzugsweise durch radikalische Emulsionspolymerisation. Die Polymerisation kann im Batchverfahren, im Zulaufverfahren, oder kombinierten Batch/Zulauf-Verfahren durchgeführt werden. Vorzugsweise wird jedoch im Zulaufverfahren gearbeitet, wobei üblicherweise ein Teil der Monomeren (1 bis 15 Gew. %) zum Starten der Polymerisation vorgelegt werden.

Die Herstellung wässriger Polymerdispersionen ist vielfach vorbeschrieben und dem Fachmann daher bekannt [vgl. z.B. Encyclopedia of Polymer Science and Engineering, Vol. 8, S. 659 ff (1987)].

Zur radikalischen Initiierung der Emulsionspolymerisation werden Initiatoren verwendet. Als Initiatoren werden beispielsweise verwendet: Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge C8-C12, Tertiärbutylhydroperoxid, Ditertiärbutylperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Methanhydroperoxid. Die vorgenannten Verbindungen können auch innerhalb eines Redoxsysteme verwendet werden, wobei Übergangsmetallsalze wie Eisen-II-sulfat oder andere Reduktionsmittel mitverwendet werden. Als Reduktionsmittel bzw. Regler können Alkalisalze der Oxymethansulfinsäure, Mercaptane der Kettenlänge C10-C14, Buten-(I)-ol-(3), Hydroxylaminsalze, Natriumdialkyldithiocarbamat, Natriumbisulfit, Ammoniumbisulfit, Natriumdithionit, Diisopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Nach Abschluss der Polymerisation kann zur Entmonomerisierung eine weitere Nachbehandlung, vorzugsweise mit Redoxkatalysatoren, wie zum Beispiel Kombinationen aus Oxidationsmitteln mit Reduktionsmitteln wie Ascorbinsäure oder weiteren, oben erwähnten Reduktionsmittel angeschlossen werden.

Es kann auch eine physikalische Entmonomerisierung, beispielsweise durch Strippen mit einem Inertgas oder eine Wasserdampfdestillation angeschlossen werden, oder eine Kombination von chemischer und physikalischer Entmonomerisierung durchgeführt werden.

Die erfindungsgemäße Lebensmittelbeschichtungsmasse enthält in Lebensmittelbeschichtungsmassen eingesetzte Hilfsmittel und Zusatzstoffe. Dabei kann es sich um Verarbeitungshilfsmittel handeln oder insbesondere um Zusatzstoffe, die der Lebensmittelbeschichtungsmasse eine gewünschte Eigenschaft verleihen.

Beispiele für Hilfsmittel und Zusatzstoffe sind Farbstoffe, Biozide, Verdickungsmittel, Stabilisierungsmittel oder Kombinationen von zwei oder mehreren dieser Zusätze.

Beispiele für Verdickungsmittel sind Polyvinylalkohol oder Celluloseether, wie Methylcellulosen, Hydroxyethyl- und Propylcellulosen, sowie Natriumcarboxymethylcellulose, ferner Gelatine, Kasein, Stärke, Gummi arabicum, Hydroxyethylstärke, Natriumalginat, Lactose, Siliciumdioxid sowie Polyacrylsäure und Polyvinylpyrrolidon. Diese Verbindungen können zusätzlich zu den als Schutzkolloid eingesetzten Verbindungen nach der Beendigung der Polymerisation bzw. bevorzugt nach Entmonomerisierung zur Einstellung einer geeigneten Applikationsviskosität zugesetzt werden.

Beispiele für Stabilisierungsmittel sind niedermolekulare Neutralisierungsmittel und Komplexbildner. Zu dieser Gruppen zählen beispielsweise Alkali-, Ammonium-, Calciumhydroxide, -carbonate, -phosphate, Alkalisalze der Ethylendiamintetraessigsäure und N-Hydroxyethylethylendiamin-tri-essigsäure, Zitronensäure, sowie Natriumacetat und Phosphorsäure, Ammoniumchlorid, Natriumsulfat, Homopolymerisat aus 2-Acrylamido-2-methyl-propansulfon-säure und ihrer Natrium-, Kalium- und Ammoniumsalze.

Bei den Bioziden handelt es sich um Stoffe zum Schutze der Dispersion und/oder der verpackten Substrats gegen mikrobiellen Befall. Vorzugsweise werden Konservierungsmittel wie ®Delvocid verwendet, die in den einschlägigen Verordnungen zu lebensmittelrechtlichen Vorschriften über Zusatzstoffe für Käse bzw. den anderen zu beschichtenden Lebensmitteln zugelassen sind.

Besonders bevorzugt werden Fungizide eingesetzt.

Zur Einstellung der Dispersion zu einer fertigen Lebensmittelbeschichtungsmasse, insbesondere einer Käsedeckmasse, können die in den einschlägigen Positivlisten zugelassenen Farbstoffe wie Karoten (E 160a), Annato (E 160b), Carbo Medicinalis vegetabilis (E 153), Titandioxid (E 171), Tartrazin (E 102), Chinolingelb (E 104), Sonnengelb FCF (E 110), Cochenillerot A (E 124), Indigotin (E 132), Brillantschwarz BN (E 151) oder Litholrubin BK (E 180) verwendet werden.

Zusätzlich zu Komponenten a) und b) kann die erfindungsgemäße Lebensmittelbeschichtungsmassen noch weitere beliebige Polymerdispersionen von gleich oder verschiedener Monomerbasis, insbesondere homo- oder copolymere Polyvinylester-Dispersionen, enthalten, sofern die geforderten Eigenschaften nicht negativ beeinträchtigt werden, insbesondere die Wasseraufnahme der Filme dadurch nicht unter den gewünschten Wert absinkt.

Der Anteil der Komponente a) in der erfindungsgemäßen Lebensmittelbeschichtungsmasse beträgt üblicherweise 75 bis 99,999 Gew. %, vorzugsweise 80 bis 99,9 Gew. %, bezogen auf die Gesamtmasse.

Der Anteil der Komponente b) in der erfindungsgemäßen Lebensmittelbeschichtungsmasse beträgt üblicherweise 0,001 bis 25 Gew. %, vorzugsweise 0,1 bis 20 Gew. %, bezogen auf die Gesamtmasse.

Die erfindungsgemäßen Lebensmittelbeschichtungsmassen besitzen gegenüber vergleichbaren Produkten mit anderer Monomerbasis den Vorteil, dass sie einen wasserfesteren Film mit deutlich verminderter Reemulgierfähigkeit und geringerer Wasseraufnahme bilden. Dennoch und unerwartet ist der Film ausreichend permeabel für Wasserdampf, so dass eine kontrollierte Reifung von Hartkäse beim Einsatz als Käsebeschichtungsmittel stattfinden kann.

Die erfindungsgemäß verwendeten Dispersionen eigenen sich speziell als Bestandteil zur Herstellung von Lebensmitteldeckmassen, insbesondere als Hilfsmittel für die Hartkäsereifung, jedoch auch zur Beschichtung anderer Lebensmittel, wie beispielsweise Früchten, Gemüsen, Fleisch- und Wurstwaren, insbesondere Hartwürsten, anderen Käsen wie Weichkäsen und Saatgut.

Diese Verwendungen sind ebenfalls Gegenstand der vorliegenden Erfindung.

Die folgenden Beispiele dienen zur Erläuterung der Erfindung. Angaben über Teile und Prozente beziehen sich auf das Gewicht, sofern nicht anders vermerkt.

Beispiel 1

In einem mit Dosiereinrichtungen und Temperaturregelung ausgerüsteten Polymerisationsreaktor wurden 3 T. PVA 5-88 (Polyvinylalkohol mit einer Höppler-Viskosität der 4 %igen wässrigen Lösung bei 20 °C von 5 mPas und einem mittlerem Hydrolysegrad von 88 mol-%) in 38 T. Wasser vorgelegt. Dazu wurden 8 Prozent einer Monomeremulsion bestehend aus 2 T. PVA 5-88, 1,26 T. Acrylsäure, 50 T. MMA (Methylmethacrylat), 50 T. BuA (Butylacrylat), 0,33 T. Ascorbinsäure und 54,6 T. Wasser gegeben. In dieser Emulsion wurde vor der Zugabe noch 0,30 T. 1-Dodecanthiol gelöst. Dann wurden 0,077 T. Tertiärbutylhydroperoxid (bzw. 0,11 T. der käuflichen 70 %igen Lösung) und 0,076 T. Ascorbinsäure (jeweils in 0,83 T. Wasser) zum Starten vorgelegt und 15 Minuten vorpolymerisiert. Dann wurden bei 70 °C die restlichen 92 % der Monomeremulsion in 3 Stunden dosiert. Parallel dazu wurde eine Lösung aus 0,29 T.Tertiärbutylhydroperoxid (bzw. 0,41 Teile der käuflichen 70 %igen Lösung) in 3,1 T.Wasser dosiert. Die Reaktionstemperatur betrug 70 - 72 °C. 30 Minuten nach Dosierende wurde eine Lösung aus 0,072 T.Ascorbinsäure in 0,80 T.Wasser in 30 Minuten dosiert. Nach einer Nachpolymerisationszeit von insgesamt 1,5 Stunden wurden bei 60°C 0,082 T. Tertiärbutylhydroperoxid (0,11 Teile der 70 %igen Lösung) in 0,83 T.Wasser und 0,076 T.Natriumformaldehydsulfoxylat in 1,4 T.Wasser zugegeben.

Man erhielt eine Koagulat-freie Dispersion vom Feststoff-Gehalt 51,8 Gew.% mit einer Viskosität nach Brookfield RVT bei 23 °C von 1700 mPas.

Beispiel 2

Es wurde wie in Beispiel 1 verfahren, mit dem Unterschied, dass die PVA-Lösung in der Vorlage 33 T. statt 38 T. Wasser enthielt und in der Monomeremulsion 46 Teile Wasser statt 54,6 Teile Wasser verwendet wurden.

Man erhielt eine Koagulat-freie Dispersion vom Feststoff-Gehalt 54,6 Gew.% mit einer Viskosität nach Brookfield RVT bei 23 °C von 5400 mPas.

Beispiel 3

Es wurde wie in Beispiel 1 verfahren, mit dem Unterschied, dass Polyvinylalkohol mit einer Höppler-Viskosität der 4 %igen wässrigen Lösung von 18 mPas statt 5 mPa*s und einem mittlerem Hydrolysegrad von 88 mol-% verwendet wurde und dass die PVA-Lösung in der Vorlage 44 T. statt 38 T. Wasser enthielt und in der Monomeremulsion 62 Teile Wasser statt 54,6 Teile Wasser verwendet wurden.

Man erhielt eine Koagulat-freie Dispersion vom Feststoff-Gehalt 48,4 Gew.% mit einer Viskosität nach Brookfield RVT bei 23 °C von 19500 mPas.

Beispiel 4

Es wurde wie in Beispiel 1 verfahren, mit dem Unterschied, dass Polyvinylalkohol mit einer Höppler-Viskosität der 4 %igen wässrigen Lösung von 8 mPas statt 5 mPa*s und einem mittlerem Hydrolysegrad von 88 mol-% verwendet wurde. Die PVA-Lösung in der Vorlage wurde wie in Beispiel 1 in 38 T. Wasser gelöst und in der Monomeremulsion wurden 54 Teile Wasser statt 54,6 Teile Wasser verwendet.

Man erhielt eine Koagulat-freie Dispersion vom Feststoff-Gehalt 52 Gew.% mit einer Viskosität nach Brookfield RVT bei 23 °C von 6800 mPas.

Beispiel 5

Es wurde wie in Beispiel 1 verfahren, mit dem Unterschied, dass sowohl in der Vorlage, als auch in der Monomeremulsion bei sonst identischer Gesamtmenge Polyvinylalkohole mit einer Höppler-Viskosität der 4 %igen wässrigen Lösung von 8 mPas und 18 mPa*s im Verhältnis 1:1 und einem mittlerem Hydrolysegrad von 88 mol-% verwendet wurden. Die PVA-Lösung in der Vorlage wurde wie in Beispiel 1 in 38 T. Wasser gelöst und in der Monomeremulsion wurden 54 Teile Wasser statt 54,6 Teile Wasser verwendet.

Man erhielt eine Koagulat-freie Dispersion vom Feststoff-Gehalt 51,6 Gew.% mit einer Viskosität nach Brookfield RVT bei 23 °C von 14100 mPas.

Vergleichsbeispiel V1

Es handelt sich um ein kommerziell erhältliches Muster von ®Mowilith SDM 4230 KL, Handelsware der Celanese Emulsions GmbH, einer Kunststoffdispersion auf Basis von Vinylacetat und Dibutylmaleinat zum Beschichten von Lebensmitteln, insbesondere Hartkäse.

Aus allen Dispersionen der Beispiele 1-5 wurden Lebensmittelbeschichtungsmittel hergestellt. Dazu wurden die Dispersionen zunächst mit 10 %iger Kalilauge auf einen pH-Wert von 4,5 (+/- =0,1) eingestellt. Die verwendete Menge 10 %iger Kalilauge betrug 2-2,5 Teile bezogen auf 100 Teile der sauren Dispersion. Dazu wurden, bezogen auf je 100 GT der sauren Dispersion, 0,2 GT des Lebensmittelzusatzstoffs E160b (Handelsware der Firma CSK Food Enrichment N.V.) gegeben und die Masse homogenisiert. Im Falles des Beispiels V1 erfolgte lediglich Abmischung mit 0,2 % E160b, da die Dispersion schon einen pH-Wert von 4,5 aufwies.

Verwendete anwendungstechnische Untersuchungsmethoden für die Ausprüfung als Lebensmittelbeschichtungsmasse.

Reemulsionstest

Ein auf eine Glasplatte aufgerakelter Film mit einer Nassschichtstärke von 300 μ wurde über Nacht bei Raumtemperatur getrocknet und die mechanische Stabilität nach einer 2-stündigen Kaltwasserlagerung optisch und mechanisch überprüft.

Wasseraufnahme der Filme

Ein Teil Käsedeckdispersion wurde mit 2 Teilen destillierten Wassers verdünnt. Mit dieser Verdünnung wurde ein Gießfilm hergestellt, aus dem nach 24-stündigem Trocknen ca. 3 x 3 cm große Quadrate von ca. 400 mg Gewicht geschnitten wurden. Diese Filmstücke wurden 24 Stunden bei Raumtemperatur im Vakuumtrockenschrank getrocknet. Die getrockneten Filmstücke wurden ausgewogen und in einer bedeckten Petrischale mit destilliertem Wasser komplett blasenfrei bedeckt. Nach 24 Stunden trocknete man jedes Filmstück zwischen zwei Lagen adsorbierendem Papiers und wog es anschließend gleich.

Die Wasseraufnahme in % ergibt sich aus dem Quotienten:

$$[(\text{Gewicht des gequollenen Films/Gewicht des getrockneten Films})\cdot 100] - 100$$

Wachshaftungstest

Die Filme werden hergestellt, indem 80 g einer auf 14 % Feststoff verdünnten Dispersion über eine Gaze auf eine mit Rand versehene Metallplatte mit einer Oberfläche von 314 cm$^2$ ausgegossen werden. Auf diese Weise ergibt sich ein getrockneter Polymerfilm von 300 $\mu$m Schichtstärke. Aus diesem Film wird ein rundes Filmstück mit einem Durchmesser von 60 mm ausgeschnitten und über eine Zeitdauer von 48 h bei einer Temperatur von 23°C und bei 50 % rel. Luftfeuchte konditioniert. Mit dem erhaltenen Filmstück wird ein mit einem Metallflansch versehener Glaszylinder verschlossen, in den vorher 0,5 g Wasser eingewogen wurden. Danach wird die Filmoberseite mit komplett geschmolzenem gelbem Wachs (®Paradip Yellow B1 der Firma Paramelt B. V.) (80°C) 4 mm stark beschichtet. Nach einer Standzeit von 5 h bei 23°C und 50 % rel. Luftfeuchte wird der Verbund Polymerfilm/Wachs vom Glaszylinder abgenommen und durch Auseinanderziehen per Hand getrennt. Die Haftung wird je nach Trennwiderstand beurteilt:

(+) = Gute Adhäsion mit stärkerer Deformation des Polymerfilms beim Trennen.
(+/-) = Mittelgute Adhäsion mit mittelstarker Deformation des Polymerfilms beim Trennen.
(-) = Schlechtere Adhäsion mit nur gering auftretender Deformation des Polymerfilms beim Trennen.

Dieser Test lässt Rückschlüsse auf die Eignung als Käsedeckmasse zu, da nach Abschluß der Reifung ein Versiegelung des gereiften Käses mit Paraffinwachs erfolgt.

Messung der Wasserdampftransmissionsrate

Zur Messung der Wasserdampftransmissionsrate wurden zunächst analog der Vorgehensweise beim Wachshaftungstest Filmstücke hergestellt und klimatisch konditioniert.

Die zwei Filmstücke wurden jeweils in ein Gefäß eingespannt, in dessen Glasschale zuvor exakt 10 g E-Wasser eingewogen wurden. Bei dem Gefäß handelte es sich um einen hohen Metallzylinder mit einer Wandstärke von 4 mm, einer Höhe von 20 mm und einem Innendurchmesser von 55 mm mit einer herausnehmbaren integrierten Glasschale. Auf diese Glasschale wurde zwischen zwei Gummidichtungen das runde Filmstück mit einem Durchmesser von etwa 60 mm gelegt. Um zu verhindern, daß während des Versuches Wasserdampf zwischen den beiden Dichtungsringen entwich, wurde zusätzlich ein Metallring mit sechs Schrauben oben auf den Metallzylinder geschraubt. Es verblieb eine Filmfläche von 23 cm$^2$, durch die Wasser verdunsten konnte. Nach dem sorgfältigen Verschrauben wurde das Gefäß mit dem Film auf der Analysenwaage gewogen. Die Gewichtsbestimmung wurde nach 7 Tagen wiederholt. Während dieser Zeit wurden die Proben bei 23 °C und 50 % rel. Luftfeuchtigkeit gelagert.

Die Bestimmung der Wasserdampftransmissionsrate geschah wie folgt:

Berechnung: Wasserverlust = 1. Wägung - Rückwägung (Angabe aller Werte in g)

$$\text{Berechnung der Diffusion:} \quad \frac{\text{Wasserverlust}}{\text{Fläche x Anzahl Tage}} = \frac{\text{Wasserverlust x } 10^4}{23 \times 7} \quad \left[\frac{g}{m^2 * d}\right]$$

Die so ermittelten Werte bezogen sich auf die verwendete Filmstärke von 300 $\mu$m.

## Tabelle 1: Ergebnisse der anwendungstechnischen Prüfungen

| Beispiel | 1 | 2 | 3 | 4 | 5 | V1 |
|---|---|---|---|---|---|---|
| Festgehalt [%] | 51,8 | 54,8 | 48,7 | 52,0 | 52,0 | 42,0 |
| Viskosität Brookfield RVT 23 °C [mPas] (20 RPM, Sp.=Spindel) | Sp. 3 1005 | Sp. 5 4040 | Sp. 6 11700 | Sp. 5 5860 | Sp. 6 11150 | Sp. 5 6000 |
| Wasseraufnahme [%] - | 12,6 | 14,4 | 14,0 | 16,9 | 14,8 | 26,5 |
| Wasserdampfdurchlässigkeit nach 7 Tagen [g/m²·d] | 112,3 | 107,1 | 118,1 | 111,6 | 120,6 | 170 |
| Wachshaftung | + | +/- | + | + | + | + |
| Beurteilung Reemulgierung | 1) | 1) | 1) | 1) | 1) | 2) |

1) Geringes Weißanlaufen. Film mechanisch fest und nicht reemulgierbar

2) Starkes Weißanlaufen. Film reemulgiert und lässt sich leicht von der Glasplatte ablösen.

Aus diesen Beispielen ist ersichtlich, dass die erfindungsgemäßen Lebensmittelbeschichtungsmassen gegenüber einem vergleichbaren Produkt des Standes der Technik mit anderer Monomerbasis den Vorteil aufweisen, dass sie einen wasserfesteren Film mit deutlich verminderter Reemulgierfähigkeit und geringerer Wasseraufnahme bilden. Dennoch und unerwartet ist der Film ausreichend permeabel für Wasserdampf, so dass eine kontrollierte Reifung von Hartkäse beim Einsatz als Käsebeschichtungsmittel stattfinden kann.

**Patentansprüche**

1. Lebensmittelbeschichtungsmasse enthaltend

    a) eine Kunststoffdispersion oder ein Gemisch von Kunststoffdispersionen enthaltend mindestens ein homo- oder copolymeres Poly(meth)acrylat mit mindestes 55 Gew. % (Meth)acrylatmonomereinheiten sowie 0,1 bis 30 Gew. % mindestens eines Schutzkolloids, sowie
    b) in Lebensmittelbeschichtungsmassen eingesetzte Hilfsmittel und/oder Zusatzstoffe.

2. Lebensmittelbeschichtungsmasse nach Anspruch 1, **dadurch gekennzeichnet, dass** die Kunststoffdispersion (Meth)acrylatmonomereinheiten aufweist, die sich von (Meth)acrylsäurealkylestern mit 1 bis 18 Kohlenstoffatomen in der Alkylkette ableiten, insbesondere von Estern der Acrylsäure und/oder der Methacrylsäure mit Methanol, Ethanol, n-Butanol, iso-Butanol oder 2-Ethyl-hexanol.

3. Lebensmittelbeschichtungsmasse nach Anspruch 2, **dadurch gekennzeichnet, dass** die (Meth)acrylsäurealkylester ausgewählt werden aus der Gruppe bestehend aus Acrylsäuremethyl-, -ethyl-, -n-butyl-, -isobutyl, und -2-ethylhexylester sowie aus Methacrylsäuremethyl-, -ethyl, -butyl, isobutyl- und 2-ethylhexylester.

**4.** Lebensmittelbeschichtungsmasse nach Anspruch 2, **dadurch gekennzeichnet, dass** die (Meth)acrylsäurealkylester lineare und verzweigte Alkylester der (Meth)acrylsäure mit 1 bis 8 Kohlenstoffatomen in der Alkylkette sind, die in einem Gehalt von 55 bis 100 Gew. %, bezogen auf die Gesamtmenge der Monomeren, eingesetzt werden.

**5.** Lebensmittelbeschichtungsmasse nach Anspruch 1, **dadurch gekennzeichnet, dass** die Kunststoffdispersion sich von unterschiedlichen (Meth)acrylatmonomeren ableitet, die so ausgewählt sind, dass die Glasübergangstemperatur der Kunststoffdispersion unterhalb von 25 °C liegt.

**6.** Lebensmittelbeschichtungsmasse nach Anspruch 5, **dadurch gekennzeichnet, dass** die eingesetzte copolymere Poly(acrylat)dispersion bis zu 45 Gew. % aus anderen Monomereinheiten als (Meth)acrylaten aufgebaut ist, die sich ableiten von Vinylestern von aliphatischen, gesättigten Carbonsäuren, vorzugsweise von Fettsäuren mit einer Kettenlänge von $C_1$-$C_{18}$, von Maleinsäure- und/oder Fumarsäureestern von einwertigen aliphatischen Alkoholen der Kettenlänge $C_1$-$C_{18}$, insbesondere von Dibutylmaleinat oder Di-2-ethylhexylmaleinat und/oder -fumarat, von Estern aliphatischer Carbonsäuren der Kettenlänge $C_3$-$C_{12}$ mit ungesättigten Alkoholen der Kettenlänge $C_3$-$C_{18}$, und/oder von Estern von ungesättigten aliphatischen Dicarbonsäuren mit Polyethylenglykolen und/oder Polypropylenglykolen.

**7.** Lebensmittelbeschichtungsmasse nach Anspruch 5, **dadurch gekennzeichnet, dass** die eingesetzte copolymere Poly(acrylat)dispersion bis zu 5 Gew. %, bezogen auf die Gesamtmonomermenge, aus Monomereinheiten aufgebaut ist, die sich ableiten von von ethylenisch ungesättigten ionischen Comonomeren, bevorzugt von $\alpha,\beta$-monoethylenisch ungesättigten Mono- und Dicarbonsäuren, insbesondere von Acrylsäure, Methacrylsäure, Maleinsäure, Itaconsäure, deren wasserlöslichen Salzen oder deren Kombinationen.

**8.** Lebensmittelbeschichtungsmasse nach Anspruch 1, **dadurch gekennzeichnet, dass** die Kunststoffdispersion mindestens einen Poly(vinylalkohol) vom Hydrolysegrad von 70 bis 100 Mol % und Viskositäten der 4 gew. %-igen wässrigen Lösungen bei 20°C von 2 bis 70 mPa·s als Schutzkolloid enthält.

**9.** Lebensmittelbeschichtungsmasse nach Anspruch 1, **dadurch gekennzeichnet, dass** Komponente b) ausgewählt wird aus der Gruppe bestehend aus Bioziden, Farbstoffen, Verdickungsmitteln, Stabilisierungsmitteln oder deren Kombinationen.

**10.** Lebensmittelbeschichtungsmasse nach Anspruch 1, **dadurch gekennzeichnet, dass** als Komponente b) mindestens ein Fungizid enthalten ist.

**11.** Lebensmittelbeschichtungsmasse nach Anspruch 1, **dadurch gekennzeichnet, dass** Komponenten a) und b) so ausgewählt werden, dass die daraus hergestellten Filme eine Wasserdampftransmissionsrate von 50 bis 400 g/($m^{2 *}$ 24h), bevorzugt von 100 und 230 g/($m^{2 *}$ 24h), ermittelt an Filmen von 300 $\mu$ Schichtdicke, aufweisen.

**12.** Lebensmittelbeschichtungsmasse nach Anspruch 1, **dadurch gekennzeichnet, dass** Komponenten a) und b) so ausgewählt werden, dass die daraus hergestellten Filme eine Wasseraufnahmefähigkeit von 5 bis 50 %, vorzugsweise von 5 bis 20 %, bezogen auf die Trockenmasse des Films, aufweisen.

**13.** Lebensmittel beschichtet mit einer Lebensmittelbeschichtungsmasse nach Anspruch 1.

**14.** Verwendung von Zusammensetzungen enthaltend Komponenten a) und b) nach Anspruch 1 zur Beschichtung von Lebensmitteln oder als Beschichtung bei der Herstellung von Lebensmitteln.

**15.** Verwendung nach Anspruch 14, **dadurch gekennzeichnet, dass** das Lebensmittel ausgewählt wird aus der Gruppe bestehend aus Früchten, Gemüsen, Fleisch- und Wurstwaren, insbesondere Hartwürsten, Käsen, insbesondere Hartkäsen und Saatgut.

**16.** Verwendung nach Anspruch 15, **dadurch gekennzeichnet, dass** es sich bei dem Lebensmittel um Hartkäse handelt.

**Claims**

1. A food coating composition comprising

   a) a plastics dispersion or a mixture of plastics dispersions comprising at least one homo- or copolymer poly(meth)acrylate having at least 55% by weight of (meth)acrylate monomer units and also 0.1 to 30% by weight of at least one protective colloid, and also
   b) aids and/or additives used in food coating compositions.

2. The food coating composition as claimed in claim 1, wherein the plastics dispersion has (meth)acrylate monomer units which are derived from (meth)acrylic acid alkyl esters having 1 to 18 carbon atoms in the alkyl chain, in particular esters of acrylic acid and/or methacrylic acid with methanol, ethanol, n-butanol, isobutanol or 2-ethylhexanol.

3. The food coating composition as claimed in claim 2, wherein the (meth)acrylic acid alkyl esters are selected from the group consisting of methyl, ethyl, n-butyl, isobutyl and 2-ethylhexyl esters of acrylic acid, and also of methyl, ethyl, butyl, isobutyl and 2-ethylhexyl esters of methacrylic acid.

4. The food coating composition as claimed in claim 2, wherein the (meth)acrylic acid alkyl esters are linear and branched alkyl esters of (meth)acrylic acid having 1 to 8 carbon atoms in the alkyl chain which are used at a content of 55 to 100% by weight, based on the total amount of the monomers.

5. The food coating composition as claimed in claim 1, wherein the plastics dispersion is derived from different (meth)acrylate monomers which are selected in such a manner that the glass transition temperature of the plastics dispersion is below 25°C.

6. The food coating composition as claimed in claim 5, wherein the copolymer poly(acrylate) dispersion used is made up of up to 45% by weight of monomer units other than (meth)acrylates which are derived from vinyl esters of aliphatic, saturated carboxylic acids, preferably fatty acids having a chain length of $C_1$-$C_{18}$, of maleic acid and/or fumaric acid esters of monohydric aliphatic alcohols of chain length $C_1$-$C_{18}$, in particular dibutyl maleate or di-2-ethylhexyl maleate and/or fumarate, of esters of aliphatic carboxylic acids of chain length $C_3$-$C_{12}$ with unsaturated alcohols of chain length $C_3$-$C_{18}$, and/or esters of unsaturated aliphatic dicarboxylic acids with polyethylene glycols and/or polypropylene glycols.

7. The food coating composition as claimed in claim 5, wherein the copolymer poly(acrylate) dispersion used is made up of up to 5% by weight, based on the total monomer amount, of monomer units which are derived from ethylenically unsaturated ionic comonomers, preferably α,β-monoethylenically unsaturated mono- and dicarboxylic acids, in particular acrylic acid, methacrylic acid, maleic acid, itaconic acid, their water-soluble salts or their combinations.

8. The food coating composition as claimed in claim 1, wherein the plastics dispersion comprises at least one poly(vinyl alcohol) of a degree of hydrolysis of 70 to 100 mol% and viscosities of the 4% strength by weight aqueous solutions at 20°C of 2 to 70 mPa·s as protective colloid.

9. The food coating composition as claimed in claim 1, wherein component b) is selected from the group consisting of biocides, dyes, thickeners, stabilizers or combinations thereof.

10. The food coating composition as claimed in claim 1, wherein at least one fungicide is present as component b).

11. The food coating composition as claimed in claim 1, wherein components a) and b) are selected in such a manner that the films produced therefrom have a water vapor transmission rate of 50 to 400 g/($m^2$ · 24 h), preferably 100 and 230 g/($m^2$ · 24 h), determined on films of 300 μ layer thickness.

12. The food coating composition as claimed in claim 1, wherein components a) and b) are selected in such a manner that the films produced therefrom have a water absorption capacity of 5 to 50%, preferably 5 to 20%, based on the dry mass of the film.

13. A food coated with a food coating composition as claimed in claim 1.

14. The use of compositions comprising components a) and b) as claimed in claim 1 for coating foods or as a coating in the production of foods.

**15.** The use as claimed in claim 14, wherein the food is selected from the group consisting of fruits, vegetables, meat products and sausage products, in particular hard sausages, cheeses, in particular hard cheeses, and seeds.

**16.** The use as claimed in claim 15, wherein the food is hard cheese.

**Revendications**

**1.** Enveloppe pour produits alimentaires contenant

a) une dispersion de plastique ou un mélange de dispersions de plastiques contenant au moins un poly(méth) acrylate homo- ou copolymère avec au moins 55 % en poids d'unités monomères de (méth)acrylate ainsi que 0,1 à 30 % en poids d'un colloïde protecteur, ainsi que
b) des auxiliaires et/ou des additifs utilisés dans les enveloppes pour produits alimentaires.

**2.** Enveloppe pour produits alimentaires selon la revendication 1, **caractérisée en ce que** la dispersion de plastique comporte des unités monomères de (méth)acrylate qui dérivent d'esters alkyliques d'acide (méth)acrylique avec 1 à 18 atomes de carbone dans la chaîne alkylique, en particulier d'esters de l'acide acrylique et/ou de l'acide méthacrylique avec le méthanol, l'éthanol, le n-butanol, l'isobutanol ou le 2-éthyl-hexanol.

**3.** Enveloppe pour produits alimentaires selon la revendication 2, **caractérisée en ce que** les esters alkyliques d'acide (méth)acrylique sont choisis parmi le groupe constitué des esters méthylique, éthylique, n-butylique, isobutylique et 2-éthyl-hexylique de l'acide acrylique ainsi que des esters méthylique, éthylique, butylique, isobutylique et 2-éthyl-hexylique de l'acide méthacrylique.

**4.** Enveloppe pour produits alimentaires selon la revendication 2, **caractérisée en ce que** les esters alkyliques d'acide (méth)acrylique sont des esters alkyliques linéaires et ramifiés de l'acide (méth)acrylique avec 1 à 8 atomes de carbone dans la chaîne alkylique, qui sont utilisés en une teneur de 55 à 100 % en poids, rapportée à la quantité totale des monomères.

**5.** Enveloppe pour produits alimentaires selon la revendication 1, **caractérisée en ce que** la dispersion de plastique dérive de différents monomères (méth)acryliques qui sont choisis de telle sorte que la température de transition vitreuse de la dispersion de plastique est située en dessous de 25 °C.

**6.** Enveloppe pour produits alimentaires selon la revendication 5, **caractérisée en ce que** la dispersion de copolymères de polyacrylates utilisée est constituée à raison de jusqu'à 45 % en poids d'unités de monomère autres que des (méth)acrylates, qui dérivent d'esters vinyliques d'acides carboxyliques aliphatiques saturés, de préférence d'acides gras avec une longueur de chaîne de $C_1$ à $C_{18}$, d'esters de l'acide maléique et/ou fumarique et d'alcools aliphatiques monovalents d'une longueur de chaîne de $C_1$ à $C_{18}$, en particulier de maléate de dibutyle ou de maléate et/ou de fumarate de di-2-éthylhexyle, d'esters d'acides carboxyliques aliphatiques de longueur de chaîne $C_3$ à $C_{12}$ avec des alcool insaturés de longueur de chaîne $C_3$ à $C_{18}$ et/ou d'esters d'acides dicarboxyliques aliphatiques insaturés avec des polyéthylène glycols et/ou des polypropylène glycols.

**7.** Enveloppe pour produits alimentaires selon la revendication 5, **caractérisée en ce que** la dispersion de copolymère de (poly)acrylate est constituée à raison de jusqu'à 5 % en poids, rapportés à la quantité totale de monomères, d'unités de monomère qui dérivent de comonomères ioniques éthyléniquement insaturés, de préférence d'acides mono- et dicarboxyliques $\alpha,\beta$-monoéthyléniquement insaturés, en particulier d'acide acrylique, d'acide méthacrylique, d'acide maléique, d'acide itaconique, de leurs sels solubles dans l'eau ou de leurs combinaisons.

**8.** Enveloppe pour produits alimentaires selon la revendication 1, **caractérisée en ce que** la dispersion de plastique contient comme colloïde de protection au moins un alcool polyvinylique de degré d'hydrolyse 70 à 100 % en mole et d'une viscosité à 20 °C de la solution aqueuse à 4 % en poids de 2 à 70 mPa·s.

**9.** Enveloppe pour produits alimentaires selon la revendication 1, **caractérisée en ce que** le composant b) est choisi parmi le groupe consistant en des biocides, des colorants, des agents épaississants, des stabilisateurs ou leurs combinaisons.

**10.** Enveloppe pour produits alimentaires selon la revendication 1, **caractérisée en ce qu'**au moins un fongicide est contenu comme composant b).

**11.** Enveloppe pour produits alimentaires selon la revendication 1, **caractérisée en ce que** les composants a) et b) sont choisis de telle sorte que les films qui en sont fabriqués présentent une vitesse de transmission de la vapeur d'eau de 50 à 400 g/(m$^2$·24h), de préférence de 100 à 230 g/(m$^2$·24h), déterminée sur des films de 300 μ d'épaisseur de couche.

**12.** Enveloppe pour produits alimentaires selon la revendication 1, **caractérisée en ce que** les composants a) et b) sont choisis de telle sorte que les films qui en sont fabriqués présentent un pouvoir d'absorption de l'eau de 5 à 50 %, de préférence de 5 à 20 %, rapporté à la masse de film sec.

**13.** Produit alimentaire revêtu d'une enveloppe pour produits alimentaires selon la revendication 1.

**14.** Utilisation de compositions contenant des composants a) et b) selon la revendication 1 pour l'enrobage de produits alimentaires ou comme enrobage lors de la préparation de produits alimentaires.

**15.** Utilisation selon la revendication 14, **caractérisée en ce que** les produits alimentaires sont choisis parmi le groupe constitué des fruits, des légumes, des viandes et des charcuteries, et particulier des saucisses sèches, des fromages, en particulier des fromages à pâte dure, et des semences.

**16.** Utilisation selon la revendication 15, **caractérisée en ce qu'**en tant que produit alimentaire, il s'agit de fromage à pâte dure.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0986965 A
- CH 419816 A
- US 20030055010 A
- WO 03054041 A
- EP 62106 A
- EP 538571 A
- EP 671420 A

### In der Beschreibung aufgeführte Nicht-Patentliteratur

- Encyclopedia of Polymer Science and Engineering. 1987, vol. 8, 659 ff